(19) **Europäisches Patentamt / European Patent Office / Office européen des brevets**

(11) **EP 4 749 715 A1**

(12) # EUROPEAN PATENT APPLICATION
published in accordance with Art. 153(4) EPC

(43) Date of publication:
**27.05.2026 Bulletin 2026/22**

(21) Application number: 24843190.0

(22) Date of filing: **18.07.2024**

(51) International Patent Classification (IPC):
*H01M 4/525* (2010.01)　　*C01G 53/00* (2025.01)
*H01M 4/36* (2006.01)　　*H01M 4/505* (2010.01)
*H01M 10/052* (2010.01)　　*H01M 10/0562* (2010.01)

(52) Cooperative Patent Classification (CPC):
Y02E 60/10

(86) International application number:
**PCT/JP2024/025852**

(87) International publication number:
**WO 2025/018402 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.07.2023  JP 2023118245**

(71) Applicant: SUMITOMO METAL MINING CO., LTD.
Tokyo
105-8716 (JP)

(72) Inventors:
• **Bong, Shun Kai**
 **Tokyo 105-8716 (JP)**
• **Morino, Yusuke**
 **Nagaokakyo-shi, Kyoto 617-8555 (JP)**
• **Shiota, Akihiro**
 **Nagaokakyo-shi, Kyoto 617-8555 (JP)**

(74) Representative: **Watermeyer, Nicholas**
 **Withers & Rogers LLP**
 **2 London Bridge**
 **London SE1 9RA (GB)**

(54) **COATED POSITIVE ELECTRODE ACTIVE MATERIAL FOR LITHIUM SECONDARY BATTERIES, METHOD FOR PRODUCING COATED POSITIVE ELECTRODE ACTIVE MATERIAL FOR LITHIUM SECONDARY BATTERIES, AND LITHIUM SECONDARY BATTERY**

(57)　A coated positive electrode active material for lithium secondary batteries is provided for sulfide-based all-solid-state secondary batteries. The coating positive electrode active material includes a positive electrode active material and a coating film. The positive electrode active material includes nickel, manganese, and cobalt. The coating film is disposed on a surface of the positive electrode active material and includes fluoride and a phosphorus-containing compound.

EP 4 749 715 A1

**Description**

TECHNICAL FIELD

The present invention relates to a coated positive electrode active material for lithium secondary batteries, a method for producing a coated positive electrode active material for the lithium secondary batteries, and a lithium secondary battery.

BACKGROUND OF THE INVENTION

In recent years, there has been strong demand for development of small and light lithium secondary batteries with high energy density to respond to wide-spreading use of mobile electronic devices, such as mobile phones, laptop computers, and the like. In addition, development of lithium secondary batteries with high energy density as batteries for electric vehicles is strongly desired.

As secondary batteries satisfying such demands, all-solid-state batteries have been attracting attention in recent years. An all-solid-state battery is a battery that is composed of a positive electrode layer, a solid electrolyte layer, a negative electrode layer, and the like. Practical applications of all-solid-state batteries are strongly desired from the viewpoint of high energy density, high output, high voltage, high safety, and the like as compared with the existing batteries using an electrolyte (electrolytic solution), such as an organic solvent or the like.

Various studies have been conducted to further improve characteristics of all-solid-state batteries.

For example, Patent Document 1 discloses a positive electrode active material for all-solid-state lithium secondary batteries, which is used for all-solid-state lithium secondary batteries. The positive electrode active material includes particles formed of a spinel complex oxide including Li, Mn, O, and two or more elements other than above (referred to as "core particles") where surfaces of the particles are each covered with an amorphous compound including Li, A (A is at least one element selected from the group consisting of Ti, Zr, Ta, Nb, and Al), and O. In addition, a molar ratio (Li/A) of Li to the A element at the surface of the positive electrode active material as measured by X-ray photoelectron spectroscopy (XPS) is 1.0 to 3.5.

RELATED-ART DOCUMENT

Patent Document

Patent Document 1: International Publication No. WO 2018/012522

SUMMARY OF THE INVENTION

PROBLEMS TO BE SOLVED BY THE INVENTION

Incidentally, further improvement in performance of all-solid-state batteries is desired. For example, further improvement in cycle characteristics is also desired. The cycle characteristics are characteristics capable of maintaining a discharge capacity and minimizing a reduction in the discharge capacity when charge and discharge are repeatedly performed.

In one aspect of the present invention, there is an object to provide a coated positive electrode active material for lithium secondary batteries, which can achieve favorable cycle characteristics when applied to a lithium secondary battery.

MEANS FOR SOLVING THE PROBLEMS

According to one aspect of the present invention to solve the above problems, there is provided a coated positive electrode active material for lithium secondary batteries, which is for sulfide-based all-solid-state secondary batteries. The coated positive electrode active material includes a positive electrode active material and a coating film. The positive electrode active material includes nickel, manganese, and cobalt. The coating film is disposed on a surface of the positive electrode active material and includes fluoride and a phosphorus-containing compound.

EFFECTS OF THE INVENTION

According to one aspect of the present invention, there can be provided a coated positive electrode active material for lithium secondary batteries, which can achieve favorable cycle characteristics when applied to a lithium secondary battery.

BRIEF DESCRIPTION OF THE DRAWINGS

[Fig. 1] Fig. 1 is a schematic cross-sectional view of a coated positive electrode active material for lithium secondary batteries according to an embodiment of the present disclosure.

[Fig. 2] Fig. 2 depicts a flow of a method for producing a coated positive electrode active material for lithium secondary batteries according to an embodiment of the present disclosure.

[Fig. 3] Fig. 3 is a schematic cross-sectional view of a lithium secondary battery.

DETAILED DESCRIPTION OF THE INVENTION

Embodiments for carrying out the present invention will be described hereinafter. However, the present invention is not limited to the following embodiments, and various modifications and substitutions can be made to the following embodiments without departing from the scope of the present invention.

[Coated positive electrode active material for lithium secondary batteries]

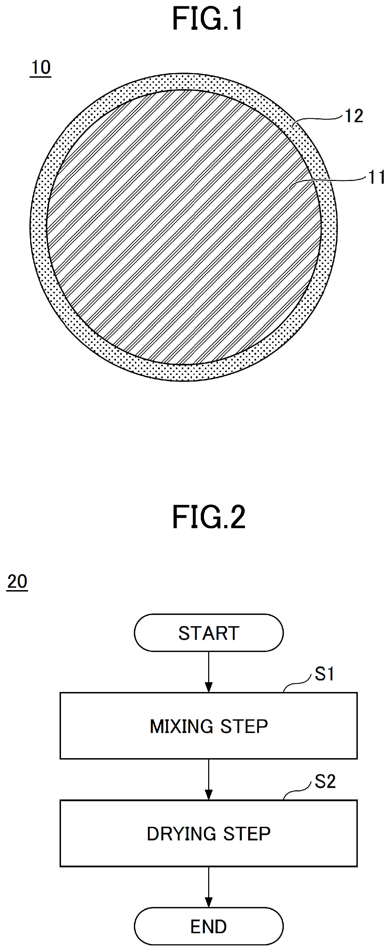

A schematic cross-sectional view of the coated positive electrode active material for lithium secondary batteries (merely referred to as a "coated positive electrode active material" hereinafter) of the present embodiment is illustrated in Fig. 1.

As illustrated in Fig. 1, the coated positive electrode active material 10 of the present embodiment can include a positive electrode active material 11 and a coating film 12 that is disposed on the surface of the positive electrode active material 11 and includes fluoride and a phosphorus-containing compound. It should be noted that Fig. 1 is a schematically illustrated view. In Fig. 1, the shape of the positive electrode active material 11 is a circle, and the coating film 12 of a uniform thickness is formed on the surface of the positive electrode active material 11, but the coated positive electrode active material is not limited to the above configuration.

The coated positive electrode active material 10 of the present embodiment is used for sulfide-based all-solid-state secondary batteries. Specifically, the coated positive electrode active material 10 of the present embodiment can be suitably used for all-solid-state batteries using a sulfide-based solid electrolyte as a solid electrolyte.

(1) Members included in coated positive electrode active material

Each of the members included in the coated positive electrode active material of the present embodiment will be described.

(1-1) Positive electrode active material

The positive electrode active material can include nickel (Ni), manganese (Mn), and cobalt (Co). The positive electrode active material 11 is not limited as long as the positive electrode active material 11 is a positive electrode active material that is capable of causing Li intercalation and deintercalation by an electrochemical reaction, and the percentage of each element or the like is not particularly limited.

The positive electrode active material 11 preferably has a layered rock salt structure. This is because the positive electrode active material having the layered rock salt structure can particularly improve output characteristics when the positive electrode active material is applied to a lithium secondary battery.

The structure of the positive electrode active material 11 can be determined, for example, according to an analysis method, such as X-ray diffraction, electron diffraction, or the like.

The ratio between the amount of substance of nickel (Ni), the amount of substance of cobalt (Co), and the amount of substance of manganese (Mn) in the positive electrode active material 11 is represented by Ni:Co:Mn = x:y:z, and preferably satisfies the relationships of $0.55 \leq x \leq 0.90$, $0 \leq y \leq 0.45$, $0 \leq z \leq 0.45$, and x+y+z = 1. This is because, when applied to a lithium secondary battery, a discharge capacity can be particularly increased as the positive electrode active material 11 includes the above elements at the above ratio.

For example, the positive electrode active material 11 can be represented by the general formula: $Li_{1+u}Ni_{x}Co_{y}Mn_{z}O_{2+\alpha}$. In the general formula, u and $\alpha$ preferably satisfy $-0.05 \leq u \leq 0.50$ and $-0.2 \leq \alpha \leq 0.2$, respectively. Since x, y, and z can be suitably adjusted to the above ranges, the description will be omitted.

The ratio between the amounts of substance of the elements in the positive electrode active material can be evaluated and determined, for example, according to an analysis method, such as X-ray fluorescence spectroscopy, ICP optical emission spectroscopy, or the like.

The shape of the positive electrode active material 11 included in the coated positive electrode active material 10 of the present embodiment is not particularly limited. The positive electrode active material 11 may be, for example, positive electrode active material particles, which have the average particle size of several nanometers to several tens of micrometers and are in the form of primary particles or secondary particles formed of aggregated primary particles. Also, the positive electrode active material 11 may be a positive electrode film in the form of a thin film. Examples of the positive electrode film in the form of a thin film include a positive electrode film formed by pulsed laser deposition (PLD).

(1-2) Coating film

The coating film 12 can include fluoride and a phosphorus-containing compound.

Since the coating film 12 is the film including the fluoride and the phosphorus-containing compound, the coating film 12 is assumed to act as a protective film that can protect the positive electrode active material and can inhibit a reaction with a sulfide-based solid electrolyte without inhibiting conduction of lithium ions between the positive electrode active material 11 and the solid electrolyte.

According to the studies of the inventors of the present invention, when charge and discharge are repeatedly performed, the resistance in the vicinity of the interface between the positive electrode active material 11 and the solid electrolyte can be reduced by disposing the coating film 12 including the fluoride and the phosphorus-containing compound on the surface of the positive electrode active material 11. Therefore, it is assumed that a reduction in the discharge capacity can be minimized, and cycle characteristics can be improved.

The arrangement of the coating film 12 is not limited as long as the coating film 12 is disposed on at least part of the surface of the positive electrode active material 11. The coating film 12 can also be disposed to cover the entire surface of the positive electrode active material 11.

The fluoride included in the coating film 12 preferably includes at least one selected from the group consisting of $LiF$, $NiF_2$, $MnF_3$, $MnF_2$, and $CoF_2$.

The phosphorus-containing compound included in the coating film 12 preferably includes at least one selected from phosphate and fluorophosphate. In this case, the phosphate preferably includes at least one anion moiety selected from $PO_2^-$ and $PO_3^-$. In addition, the fluorophosphate preferably includes at least one anion moiety selected from $POF^-$, $PO_2F^-$, $PO_3F^-$, and $PO_2F_2^-$.

The substances included in the coating film 12 can be confirmed by time-of-flight secondary ion mass spectrometry (TOF-SIMS). Therefore, when the coating film 12 is measured by TOF-SIMS, preferably at least two fragments among fragments of fluoride, phosphate, and fluorophosphate can be completely or partially detected.

In this case, examples of the fragments of fluoride include $LiF^-$ and the like. Examples of the fragments of phosphate include $PO_2^-$, $PO_3^-$, and the like. Examples of the fragments of fluorophosphoric acid include $POF^-$, $PO_2F^-$, $PO_3F^-$, $PO_2F_2^-$, and the like.

By completely or partially detecting at least two fragments from the above fragments when the coating film 12 is measured by TOF-SIMS, it can be confirmed that the coating film 12 includes corresponding fluoride and a corresponding phosphorus-containing compound.

As described above, the coating film 12 includes the fluoride and the phosphorus-containing compound, and therefore it can be assumed that a reaction between the positive electrode active material 11 and a solid electrolyte can be inhibited, and the deterioration of the solid electrolyte can be minimized. From the viewpoint of sufficiently enhancing the above effects, a fluorine content of the coated positive electrode active material 10 of the present embodiment as determined by combustion ion chromatography is preferably 0.01 percent by mass or greater. Since the coated positive electrode active material 10 of the present embodiment includes fluorine in the amount of 0.01 percent by mass or greater, the coating film 12 can be sufficiently provided to the surface of the positive electrode active material 11, thereby particularly improving cycle characteristics.

The upper limit of the fluorine content of the coated positive electrode active material 10 of the present embodiment is not particularly limited. The fluorine content of the coated positive electrode active material 10 of the present embodiment evaluated by combustion ion chromatography is, for example, preferably 0.5 percent by mass or less, and more preferably 0.4 percent by mass or less. By setting the fluorine content to 0.5 percent by mass or less, the coating film 12, which does not contribute to charge and discharge, is prevented from constituting an excessively large proportion of the resultant coated positive electrode active material, a transport efficiency of lithium ions at the interface is enhanced, and a charge and discharge capacity and cycle characteristics are improved when applied to a lithium secondary battery.

(1-3) Other components

The positive electrode active material 11 in the form of particles typically includes lithium carbonate, lithium hydroxide, or the like at the surfaces of the particles due to a production process or the like. When the coated positive electrode active material 10 of the present embodiment is produced, lithium carbonate or lithium hydroxide reacts with raw materials of the coating film 12. Therefore, the amount of lithium carbonate or lithium hydroxide in the coated positive electrode active material 10 of the present embodiment can be reduced, but part of the lithium carbonate or lithium hydroxide may remain at the surface of the coating film 12 or the like.

By reducing the amount of lithium carbonate or lithium hydroxide, the resistance of the positive electrode can be reduced, and output characteristics can be improved, when the coated positive electrode active material 10 of the present embodiment is applied to a lithium secondary battery. Therefore, the amount of lithium carbonate or lithium hydroxide is preferably reduced in the coated positive electrode active material for lithium secondary batteries of the present embodiment.

The amount of lithium carbonate or the like can be evaluated by measuring the coated positive electrode active material 10 of the present embodiment by TOF-SIMS. In the case where the measurement of TOF-SIMS is performed, the ion intensity of the detected $LiOH^-$ is determined as A, the ion intensity of the detected $LiCO_2^-$ is determined as B, the ion intensity of the detected $LiCO_3^-$ is determined as C, the ion intensity of the detected $Li_2CO_3^-$ is determined as D, and the ion intensity of the detected $NiO_2^-$ is determined as E.

In this case, the coated positive electrode active material for lithium secondary batteries of the present embodiment preferably satisfies the following formula (1).

$$(A+B+C+D)/E \leq 1.5 \qquad (1)$$

By satisfying the above formula (1), it is indicated that the amount of lithium carbonate or lithium hydroxide in the coated positive electrode active material 10 of the present embodiment can be sufficiently reduced with respect to nickel included in the positive electrode active material 11 portion. Therefore, when the coated positive electrode active material 10 of the present embodiment is applied to a lithium secondary battery, the resistance of the positive electrode can be reduced, and output characteristics can be improved by satisfying the above formula (1).

The lower limit of the above (A+B+C+D)/E is not particularly limited and is, for example, preferably 0.05 or greater.

[Method for producing coated positive electrode active material for lithium secondary batteries]

Next, the method for producing the coated positive electrode active material of the present embodiment will be described. According to the method for producing the coated positive electrode active material of the present embodiment, the above-described coated positive electrode active material for lithium secondary batteries can be produced. Thus, the features, which have been already described, will be partially omitted.

The method for producing the coated positive electrode active material of the present embodiment is not particularly limited. For example, the method for producing the coated positive electrode active material can be performed according to the flow 20 illustrated in Fig. 2 and can include a mixing step S1 and a drying step S2.

(1) Mixing step S1

At the mixing step S1, a mixed solution can be prepared by mixing a positive electrode active material including nickel, manganese, and cobalt with a coating solution.

(Positive electrode active material)

Since a suitable composition or the like of the positive electrode active material provided for the mixing step S1 has already been described in association with the coated positive electrode active material for lithium secondary batteries, the description will be omitted.

(Coating solution)

The coating solution can include a lithium hexafluorophosphate ($LiPF_6$) powder and an organic solvent.

The organic solvent can be selected from various organic solvents, such as alcohol-based organic solvents, ester-based organic solvents, hydrocarbon-based organic solvents, ketone-based organic solvents, and the like. However, an alcohol-based organic solvent can be suitably used as the organic solvent because the lithium hexafluorophosphate powder can be dispersed or dissolved in the alcohol-based organic solvent, and the alcohol-based organic solvent can be easily removed in a drying step.

Therefore, the alcohol-based organic solvent is preferably used as the organic solvent. For example, at least one selected from the group consisting of isopropyl alcohol, methanol, ethanol, and the like can be more preferably used as the organic solvent. The organic solvent is yet more preferably ethanol because ethanol is particularly easily handled and readily available.

The coating solution preferably includes the lithium hexafluorophosphate powder in a manner that the percentage of the lithium hexafluorophosphate powder is to be 0.1 percent by mass or greater and 2.0 percent by mass or less relative to a mass of the positive electrode active material mixed at the mixing step. Since the coating solution includes the lithium hexafluorophosphate powder in a manner that the percentage of the lithium hexafluorophosphate powder is to be 0.1 percent by mass or greater relative to a mass of the positive electrode active material mixed at the mixing step, the coating film 12 can be sufficiently formed on the surface of the positive electrode active material 11.

In addition, since the coating solution includes the lithium hexafluorophosphate powder in a manner that the percentage of the lithium hexafluorophosphate powder is to be 2.0 percent by mass or less relative to a mass of the positive electrode active material mixed at the mixing step, the coating film 12, which does not contribute to discharge, can be prevented from constituting an excessively large part of the resultant coated positive electrode active material. Accordingly, a charge-discharge capacity and cycle characteristics can be improved when the obtained coated positive electrode active material 10 is applied to a lithium secondary battery.

A method of mixing the positive electrode active material and the coating solution is not particularly limited. The positive electrode active material and the coating solution can be supplied to and mixed in a vessel. In particular, mixing the positive electrode active material and the coating solution by an ultrasonic disperser is preferable from the viewpoint of dispersibility of the positive electrode active material in the coating solution.

(2) Drying step S2

At the drying step S2, the mixed solution prepared in the mixing step S1 can be dried while stirring.

A method of drying the mixed solution with stirring at the drying step S2 is not particularly limited. Examples of the method include: a method of heating the mixed solution with a heat source, such as hot air, infrared rays, far infrared rays, near infrared rays, or the like, to evaporate the mixed solution to dryness; a method of drying the mixed solution under reduced pressure, such as vacuum drying; and the like.

When the mixed solution is evaporated to dryness, the atmosphere is not particularly limited. For example, the atmosphere is an oxygen-containing atmosphere, an inert gas atmosphere, or the like. The oxygen-containing atmosphere may be a mixed atmosphere of oxygen and an inert gas, an air atmosphere, an oxygen atmosphere consisting of oxygen, or the like. In the case of the air atmosphere, a dry air atmosphere with a suppressed dew point can be used.

The drying step S2 may be a single step or multiple steps using different drying methods, for example, a first drying step in which the mixed solution is heated to evaporate to dryness, and a second drying step in which the mixed solution is dried under reduced pressure.

By performing the drying step, the lithium hexafluorophosphate included in the coating solution is deposited and fixed on the surfaces of the particles of the positive electrode active material 11, thereby forming a coating film 12.

It is assumed that the lithium hexafluorophosphate reacts with lithium carbonate or the like attached to the surfaces of the particles of the positive electrode active material 11 to decompose the lithium carbonate or the like, thereby forming fluoride or a phosphorus-containing compound. In order to aid such a reaction to progress and also facilitate the removal of the organic solvent in the coating solution, the mixed solution is preferably heated at the drying step S2.

The heating temperature is not particularly limited, but heating is preferably performed at 80°C or higher, which is a decomposition temperature of lithium hexafluorophosphate. The upper limit of the heating temperature is not particularly limited. From the viewpoint of minimizing a reduction in performance of the formed coating film 12, the upper limit of the heating temperature is preferably 350°C or lower, and more preferably 200°C or lower.

After completing the drying step S2, if aggregation or the like is observed in the obtained coated positive electrode active material, crushing or sieving may be performed as necessary. In the case where the drying step S2 includes multiple drying steps, crushing or the like may be performed between the drying steps.

In the method for producing the coated positive electrode active material of the present embodiment, heating at a high temperature, such as firing, is not preferably performed after the mixing step S1 from the viewpoint of particularly improving cyclic characteristics of the obtained coated positive electrode active material 10. Specifically, in the method for producing the coated positive electrode active material of the present embodiment, after the mixing step S1, heating is preferably not performed at a temperature higher than the heating temperature of the drying step S2. Therefore, in the method for producing the coated positive electrode active material of the present embodiment, the maximum temperature of the product to be processed, such as the positive electrode active material and the like, reached after the mixing step S1 is, for example, preferably 350°C or lower, and more preferably 200°C or lower.

[Lithium secondary battery]

The lithium secondary battery of the present embodiment can include a positive electrode, a negative electrode, and a solid electrolyte layer.

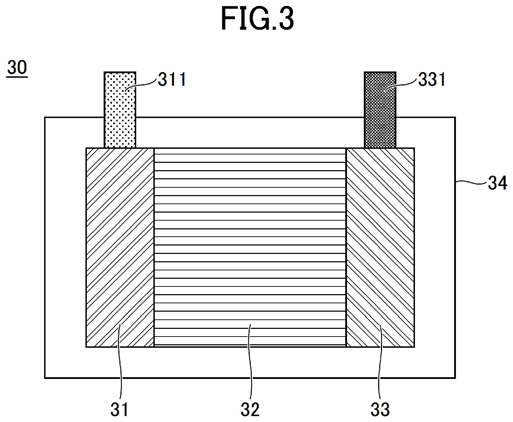

Specifically, for example as illustrated in Fig. 3, the lithium secondary battery 30 can include a positive electrode 31, a solid electrolyte layer 32, and a negative electrode 33. As illustrated in Fig. 3, the solid electrolyte layer 32 can be disposed between the positive electrode 31 and the negative electrode 33, and the above members can be sealed in a container 34. The positive electrode 31 and the negative electrode 33 are provided with a positive electrode terminal 311 and a negative electrode terminal 331, respectively, and can be configured to be connected to a member outside the container 34.

The positive electrode 31 is not limited as long as the positive electrode 31 includes at least the above-described coated positive electrode active material. The positive electrode 31 may be composed of the above-described coated positive electrode active material. The positive electrode 31 can include the above-described coated positive electrode active material and a sulfide-based solid electrolyte.

The positive electrode 31 may include, in addition to the coated positive electrode active material and the solid electrolyte, materials, such as a conductive aid, a binder, an ionic liquid, and the like, other additives, or the like.

The solid electrolyte layer 32 is not particularly limited as long as the solid electrolyte layer 32 includes a lithium ion-conductive solid electrolyte. The solid electrolyte layer 32 may be composed of the solid electrolyte, or may further include materials, such as a binder and the like.

The negative electrode 33 is not particularly limited as long as the negative electrode 33 includes at least a negative electrode active material. The negative electrode 33 may be composed of the negative electrode active material. The negative electrode 33 may include the negative electrode active material and a solid electrolyte. As the negative electrode active material, for example, a lithium-containing material, such as a lithium metal, a lithium alloy, or the like, or an occluding material capable of occluding and releasing lithium ions can be used. The occluding material is not particularly limited, but for example, an organic compound fired body, such as natural graphite, artificial graphite, a phenol resin, or the like, or a carbon material such as coke can be used. As the solid electrolyte, for example, at least one selected from the group consisting of a sulfide-based solid electrolyte, an oxide-based solid electrolyte, and a polymer electrolyte can be used. The negative electrode may include, in addition to the negative electrode active material and the solid electrolyte, materials, such as a conductive aid, a binder, an ionic liquid, and the like, other additives, or the like.

(Regarding solid electrolyte)

As a solid electrolyte used in the lithium secondary battery 30 of the present embodiment, for example, a sulfide-based solid electrolyte can be used.

As described above, the solid electrolyte can be added to the positive electrode 31 or the negative electrode 33, in addition to the solid electrolyte layer 32. The solid electrolyte used in the solid electrolyte layer 32 and the solid electrolyte used in the positive electrode 31 or the negative electrode 33 may be the same or different.

Examples of the sulfide-based solid electrolyte include, but are not limited to, a sulfide-based amorphous solid electrolyte, a sulfide-based crystalline solid electrolyte, an argyrodite-type solid electrolyte, and the like. Specific examples of the sulfide-based solid electrolyte include, but are not limited to, $Li_2S\text{-}P_2S_5$-based solid electrolytes ($Li_7P_3S_{11}$, $Li_3PS_4$, $Li_8P_2S_9$, and the like), $Li_2S\text{-}SiS_2$, $LiI\text{-}Li_2S\text{-}SiS_2$, $LiI\text{-}Li_2S\text{-}P_2S_5$, $LiI\text{-}LiBr\text{-}Li_2S\text{-}P_2S_5$, $Li_2S\text{-}P_2S_5\text{-}GeS_2$ ($Li_{13}GeP_3S_{16}$, $Li_{10}GeP_2S_{12}$, and the like), $LiI\text{-}Li_2S\text{-}P_2O_5$, $LiI\text{-}Li_3PO_4\text{-}P_2S_5$, $Li_{7-x}PS_{6-x}Cl_x$; or any combination of the foregoing.

The solid electrolyte may be glass or crystallized glass (glass ceramic).

Examples

The present embodiment will be more concretely described with reference to Examples. However, the present embodiment is not limited to Examples below.

[Example 1]

A coated positive electrode active material was prepared and evaluated.

(1) Production of coated positive electrode active material

A coated positive electrode active material was produced according to the flow 20 illustrated in Fig. 2.

(1-1) Mixing step S1

At the mixing step S1, the following positive electrode active material and coating solution were supplied to and mixed in a vessel, thereby preparing a mixed solution.

(Positive electrode active material)

As a positive electrode active material, a lithium nickel complex oxide having a layered rock salt structure, which was represented by $Li_{1.02}Ni_{0.8}Mn_{0.1}Co_{0.1}O_2$, was prepared.

(Coating solution)

A lithium hexafluorophosphate ($LiPF_6$) powder and ethanol serving as an organic solvent were mixed, thereby preparing a coating solution.

When the coating solution was prepared, the lithium hexafluorophosphate powder was added in a manner that the percentage of the mass of the lithium hexafluorophosphate powder was to be 1 percent by mass relative to the mass of the positive electrode active material mixed in this step.

(1-2) Drying step S2

A drying step S2 was performed through a first drying step and a second drying step described below.

(First drying step)

The first drying step was performed by heating the mixed solution obtained in the mixing step S1 at 100 ° C in the air atmosphere while stirring. The first drying step was performed until the organic solvent in the mixed solution was sufficiently reduced and almost no change in weight was observed.

Since the dried powder obtained after the first drying step was found to be aggregated, the dried powder was crushed, followed by being subjected to the second drying step.

(Second drying step)

At the second drying step, vacuum-drying of the dried powder obtained in the first drying step was performed while heating at 120 ° C. The second drying step was also performed until almost no change in weight was observed.

(2) Evaluations of coated positive electrode active material

(2-1) TOF-SIMS evaluation

The coated positive electrode active material produced in the present example was evaluated by TOF-SIMS (model: TOFSIMS.5, manufactured by IONTOF). When the measurement of TOF-SIM was performed, the sample was handled in a glove box or in vacuum so as not to be exposed to the air.

As a result of the evaluation, $LiF^-$, $PO_2^-$, and $PO_2F^-$ were detected as detection components related to at least the fluoride and the phosphorus-containing compound. Specifically, it could be confirmed that the coating film 12 included the fluoride and the phosphorus-containing compound, and included phosphate and fluorophosphate as the phosphorus-containing compound. In addition, it could be confirmed that LiF was included as the fluoride, the $PO_2^-$ anion moiety was included as the phosphate, and the $PO_2F^-$ anion moiety was included as the fluorophosphate.

In addition, since $LiOH^-$, $LiCO_2^-$, $LiCO_3^-$, and $Li_2CO_3^-$ were also detected, it could be confirmed that the obtained coated positive electrode active material for lithium secondary batteries included lithium hydroxide and lithium carbonate.

Therefore, the ion intensity of the detected $LiOH^-$ was determined as A, the ion intensity of the detected $LiCO_2^-$ was determined as B, the ion intensity of the detected $LiCO_3^-$ was determined as C, the ion intensity of the detected $Li_2CO_3^-$ was determined as D, and the ion intensity of the detected $NiO_2^-$ was determined as E, and a value of (A+B+C+D)/E was calculated. The evaluation results are presented in Table 1.

(2-2) Combustion ion chromatography evaluation

The coated positive electrode active material for lithium secondary batteries produced in the present example was evaluated for a fluorine content by combustion ion chromatography (automatic sample combustion device AQF-2100S manufactured by Nittoseiko Analytech Co., Ltd., and an ion chromatograph Compact IC Flex manufactured by Metrohm). The evaluation results are presented in Table 1.

(3) Evaluation of electrochemical characteristics

(3-1) Production of all-solid-state battery

The evaluation of the electrochemical characteristics was performed by producing an all-solid-state battery including a sulfide-based solid electrolyte according to the following method.

(Positive electrode)

The coated positive electrode active material and a sulfide-based solid electrolyte powder were mixed at a volume ratio of the coated positive electrode active material:the solid electrolyte = 50:50. The obtained mixture was molded to produce a positive electrode.

(Solid electrolyte layer)

A solid electrolyte layer (separator layer) was molded and produced using a solid electrolyte layer powder that was the same as the solid electrolyte layer powder used for the positive electrode.

(Negative electrode)

An indium-lithium alloy was used for a negative electrode.
The positive electrode, the solid electrolyte layer, and the negative electrode were stacked in this order, and the stacked three layers were press-molded and packaged by laminate packaging, thereby producing a lithium secondary battery.

(3-2) Evaluation of capacity retention rate

First, a charge-discharge cycle for conditioning was repeated three times under the following conditions.
After performing constant-current charge of the produced all-solid-state battery at the current density of 0.1C, up to to 4.25 V, based on the Li potential in the environment of 25°C, constant-voltage charge was performed at 4.25 V based on the Li potential until the current density reached 0.1C.
Thereafter, after constant-current charge of the all-solid-state battery was performed at the current density of 0.1C, up to 3.00 V, based on the Li potential, constant voltage discharge was performed at 3.00 V based on the Li potential until the current density reached 0.1C.
The charge-discharge cycle was repeated three times under the above conditions, and the constant-current discharge capacity at the third discharge was determined as a pre-test capacity A.
Next, a charge-discharge cycle up to 4.25 V was repeated three times.
After performing constant-current charge at the current density of 0.1 C, up to 4.25 V, based on the Li potential, constant-voltage charge was performed at 4.25 V based on the Li potential until the current density reached 0.1C.
Thereafter, after performing constant-current discharge at the current density of 0.1C, up to 3.00 V, based on the Li potential, constant-voltage discharge was performed at 3.00 V based on the Li potential until the current density reached 0.1C.
The charge-discharge cycle was repeated three times under the above conditions, and the constant-current discharge capacity at the third discharge was determined as a post-test capacity A.
A capacity retention rate was calculated using the measured pre-test capacity A (A) and the measured post-test capacity B (B) according to the following equation (2).

$$(\text{Capacity retention rate}) = B/A \times 100 \qquad (2)$$

The evaluation results are presented in Table 1.

[Example 2]

(1) Production of coated positive electrode active material for lithium secondary batteries

A coated positive electrode active material for lithium secondary batteries was produced under the same conditions as Example 1, except that, when the coating solution was prepared at the mixing step, the lithium hexafluorophosphate was added in a manner that the percentage of the mass of the lithium hexafluorophosphate was to be 0.25 percent by mass relative to the mass of the positive electrode active material to be mixed.

(2) Evaluations of coated positive electrode active material for lithium secondary batteries

A TOF-SIMS evaluation and a combustion ion chromatography evaluation were performed under the same conditions as Example 1, except that the evaluations were performed on the coated positive electrode active material for lithium secondary batteries produced in the present example.

As a result of the TOF-SIMS evaluation, $LiF^-$, $PO_2^-$, and $PO_2F^-$ were detected as detection components related to at least the fluoride and the phosphorus-containing compound. Specifically, it could be confirmed that the coating film 12 included the fluoride and the phosphorus-containing compound, and the phosphate and the fluorophosphate were included as the phosphorus-containing compound. In addition, it could be confirmed that LiF was included as the fluoride, the $PO_2^-$ anion moiety was included as the phosphate, and the $PO_2F^-$ anion moiety was included as the fluorophosphate.

In addition, since $LiOH^-$, $LiCO_2^-$, $LiCO_3^-$, and $Li_2CO_3^-$ were also detected, it could be confirmed that the obtained coated positive electrode active material for lithium secondary batteries included lithium hydroxide and lithium carbonate.

Therefore, the ion intensity of the detected $LiOH^-$ was determined as A, the ion intensity of the detected $LiCO_2^-$ was determined as B, the ion intensity of the detected $LiCO_3^-$ was determined as C, the ion intensity of the detected $Li_2CO_3^-$ was determined as D, and the ion intensity of the detected $NiO_2^-$ was determined as E, and a value of (A+B+C+D)/E was calculated. The evaluation results are presented in Table 1.

(3) Evaluation of electrochemical characteristics

An all-solid-state battery was produced, and a capacity retention rate was evaluated under the same conditions as Example 1, except that the coated positive electrode active material for lithium secondary batteries produced in the present example was used. The evaluation result is presented in Table 1.

[Comparative Example 1]

(1) Preparation of positive electrode active material

The positive electrode active material provided to the mixing step in Example 1 was used as a positive electrode active material for lithium secondary batteries of Comparative Example 1. Specifically, the mixing step and the drying step were not performed.

(2) Evaluations of positive electrode active material

A TOF-SIMS evaluation and a combustion ion chromatography evaluation were performed under the same conditions as Example 1, except that the evaluations were performed on the positive electrode active material of Comparative Example 1.

As a result of the TOF-SIMS evaluation, fragments related to at least the fluoride and the phosphorus-containing compound could not be detected.

However, since $LiOH^-$, $LiCO_2^-$, $LiCO_3^-$, and $Li_2CO_3^-$ were detected, it could be confirmed that the positive electrode active material for lithium secondary batteries of Comparative Example 1 included lithium hydroxide and lithium carbonate.

The ion intensity of the detected $LiOH^-$ was determined as A, the ion intensity of the detected $LiCO_2^-$ was determined as B, the ion intensity of the detected $LiCO_3^-$ was determined as C, the ion intensity of the detected $Li_2CO_3^-$ was determined as D, and the ion intensity of the detected $NiO_2^-$ was determined as E, and a value of (A+B+C+D)/E was calculated. The evaluation results are presented in Table 1.

(3) Evaluation of electrochemical characteristics

An all-solid-state battery was produced, and a capacity retention rate was evaluated under the same conditions as Example 1, except that the positive electrode material for lithium secondary batteries of Comparative Example 1 was used. The evaluation results are presented in Table 1.

[Table 1]

| | | | Ex. 1 | Ex. 2 | Comp. Ex. 1 |
|---|---|---|---|---|---|
| Evaluations of coated positive electrode active material for lithium secondary batteries | TOF-SIMS result | (A+B+C+D)/E | 0.8 | 0.4 | 1.5 |
| | Combustion ion chromatography result | Fluorine content (mass %) | 0.5 | 0.08 | - |
| Evaluation of lithium secondary battery | Capacity retention rate (%) | | 99 | 93.4 | 92.3 |

It could be confirmed from Table 1 that the capacity retention rate became high when the coated positive electrode active materials of Examples 1 and 2, in which the coating film including the fluoride and the phosphorus-containing compound was disposed on the surface of the positive electrode active material, were used, compared to when the positive electrode active material of Comparative Example 1 without the coating film was used. Specifically, it could be confirmed that favorable cycle characteristics could be achieved when each of the coated positive electrode active materials of Examples 1 and 2 was applied to a lithium secondary battery.

The present application claims priority based on Japanese Patent Application No. 2023-118245 filed with the Japan Patent Office on July 20, 2023, and the entire contents of Japanese Patent Application No. 2023-118245 are incorporated herein by reference.

REFERENCE SIGNS LIST

10: coated positive electrode active material (coated positive electrode active material for lithium secondary batteries)
11: positive electrode active material
12: coating film
20: flow
S1: mixing step
S2: drying step
30: lithium secondary battery
31: positive electrode
311: positive electrode terminal
32: solid electrolyte layer
33: negative electrode
331: negative electrode terminal
34: container

Claims

1. A coated positive electrode active material for lithium secondary batteries, which is for sulfide-based all-solid-state secondary batteries, the coating positive electrode active material comprising:

    a positive electrode active material including nickel, manganese, and cobalt; and
    a coating film that is disposed on a surface of the positive electrode active material and includes fluoride and a phosphorus-containing compound.

2. The coated positive electrode active material for lithium secondary batteries according to claim 1,

    wherein the coated positive electrode active material satisfies a formula (1) below,

$$(A+B+C+D)/E \leq 1.5 \qquad (1)$$

    where, when the coated positive electrode active material is measured by TOF-SIMS, A is an ion intensity of detected $LiOH^-$, B is an ion intensity of detected $LiCO_2^-$, C is an ion intensity of detected $LiCO_3^-$, D is an ion

intensity of detected $Li_2CO_3^-$, and E is an ion intensity of detected $NiO_2^-$.

3. The coated positive electrode active material for lithium secondary batteries according to claim 1 or 2,

wherein the fluoride includes at least one selected from the group consisting of LiF, $NiF_2$, $MnF_3$, $MnF_2$, and $CoF_2$, the phosphorus-containing compound includes at least one selected from the group consisting of phosphate and fluorophosphate, the phosphate includes at least one anion moiety selected from the group consisting of $PO_2^-$ and $PO_3^-$, and the fluorophosphate includes at least one anion moiety selected from the group consisting of $POF^-$, $PO_2F^-$, $PO_3F^-$, and $PO_2F_2^-$.

4. The coated positive electrode active material for lithium secondary batteries according to claim 1 or 2, wherein, when the coating film is measured by TOF-SIMS, at least two or more fragments, among fragments of fluoride, phosphate, and fluorophosphate, are completely or partially detected.

5. The coated positive electrode active material for lithium secondary batteries according to claim 1 or 2, wherein a fluorine content of the coated positive electrode active material as determined by combustion ion chromatography is 0.01 percent by mass or greater.

6. The coated positive electrode active material for lithium secondary batteries according to claim 1 or 2, wherein a ratio between an amount of substance of the nickel (Ni), an amount of substance of the cobalt (Co), and an amount of substance of the manganese (Mn) in the positive electrode active material is represented by Ni:Co:Mn = x:y:z, and satisfies relationships of $0.55 \leq x \leq 0.90$, $0 \leq y \leq 0.45$, $0 \leq z \leq 0.45$, and x+y+z = 1.

7. A method for producing a coated positive electrode active material for lithium secondary batteries, the method comprising:

a mixing step of mixing a positive electrode active material including nickel, manganese, and cobalt with a coating solution to prepare a mixed solution; and
a drying step of drying the mixed solution while stirring, wherein the coating solution includes a lithium hexafluorophosphate powder and an organic solvent, where the coating solution includes the lithium hexafluorophosphate powder in a manner that a percentage of the lithium hexafluorophosphate powder is to be 0.1 percent by mass or greater and 2.0 percent by mass or less relative to a mass of the positive electrode active material.

8. A lithium secondary battery comprising:

a positive electrode;
a negative electrode; and
a solid electrolyte layer,
wherein the positive electrode includes the coated positive electrode active material for lithium secondary batteries of claim 1 or 2 and a sulfide-based solid electrolyte.

# FIG.1

# FIG.2

# FIG.3

## INTERNATIONAL SEARCH REPORT

| International application No. |
| --- |
| **PCT/JP2024/025852** |

**A.  CLASSIFICATION OF SUBJECT MATTER**

***H01M 4/525***(2010.01)i; ***C01G 53/00***(2006.01)i; ***H01M 4/36***(2006.01)i; ***H01M 4/505***(2010.01)i; ***H01M 10/052***(2010.01)i; ***H01M 10/0562***(2010.01)i

FI:   H01M4/525; H01M4/505; H01M4/36 C; H01M10/052; H01M10/0562; C01G53/00 A

According to International Patent Classification (IPC) or to both national classification and IPC

**B.  FIELDS SEARCHED**

Minimum documentation searched (classification system followed by classification symbols)

H01M4/525; C01G53/00; H01M4/36; H01M4/505; H01M10/052; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| X | WO 2021/221001 A1 (PANASONIC INTELLECTUAL PROPERTY MANAGEMENT CO., LTD.) 04 November 2021 (2021-11-04) claims, paragraphs [0042], [0100], examples | 1, 4-5 |
| Y | | 2-8 |
| Y | JP 2015-072772 A (SAMSUNG ELECTRONICS CO., LTD.) 16 April 2015 (2015-04-16) claims, paragraphs [0018]-[0020], examples | 2-8 |

☐ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **03 October 2024** | **15 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

### INTERNATIONAL SEARCH REPORT
#### Information on patent family members

International application No.

**PCT/JP2024/025852**

| Patent document cited in search report | | | Publication date (day/month/year) | Patent family member(s) | | | Publication date (day/month/year) |
|---|---|---|---|---|---|---|---|
| WO | 2021/221001 | A1 | 04 November 2021 | US | 2023/0080525 | A1 | |
| | | | | claims, paragraphs [0059]-[0117], examples | | | |
| | | | | EP | 4145555 | A1 | |
| | | | | CN | 115461887 | A | |
| JP | 2015-072772 | A | 16 April 2015 | US | 2015/0093651 | A1 | |
| | | | | claims, paragraph [0047], examples | | | |
| | | | | KR | 10-2015-0039575 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018012522 A

- JP 2023118245 A